# EUROPEAN PATENT APPLICATION

(11) **EP 4 067 534 A1**
(43) Date of publication of application: **05.10.2022**
(21) Application number: 21165977.6
(22) Date of filing: 30.03.2021
(51) Int. Cl.: C25B 1/04, C25B 9/67, C25B 15/08, C02F 1/04, F03D 9/19, F03D 13/25, C02F 1/16

(54) **OFFSHORE RENEWABLE ENERGY POWER STATION**

(71) Applicant: Siemens Gamesa Renewable Energy A/S, 7330 Brande (DK)
(72) Inventor: Kalogirou, Andromachi, 8000 Aarhus C (DK); Madsen, Finn Daugaard, 7190 Billund (DK); Mortensen, Henrik Bach, 8800 Viborg (DK); Serup, Mikkel, 7330 Brande (DK)
(74) Representative: SGRE-Association

(57) **Abstract**

An offshore power station (100) includes a wind turbine (1), a water desalination unit (20) and an electrolysis apparatus (10) for producing hydrogen (12). The water desalination unit (20) are connected to an inlet (40) of salted water, the electrolysis apparatus (10) being connected to the water desalination unit (20) for receiving a supply (21) of desalinated water. The electrolysis apparatus (10) and the water desalination unit (20) are thermally connected to one another in such a way that a heat power input (11) from the electrolysis apparatus (10) is provided to the water desalination unit (20) for the production of the supply (21) of desalinated water and a cooling power input (23) from the water desalination unit (20) is provided to the electrolysis apparatus (10) .

## Description

### Field of invention

The present invention relates to offshore renewable energy power station including a wind turbine and an electrolysis apparatus for producing hydrogen.

### Art Background

In order that offshore wind turbines are major part of the future energy mix, it would be desirable to fuel wind to other energy sectors. In such a scenario an electrolysis system may be placed locally on an offshore wind turbine power station along with a water treatment unit which desalinates and purifies the seawater based on the inlet water standards of the electrolyser. A plurality of such power station may be arranged in an offshore wind farm.

Hydrogen production at the offshore power station needs to be disconnected from any external water supply outside of the offshore wind farm. For smooth system integration, the operational circle of energy, water and hydrogen production needs to be seamlessly synchronized. The systems synchronization can be challenged in the start/stop phases but also during downtime or idling positions.

It is therefore an object of the present invention to provide a closed integrated offshore power system including a wind turbine and an electrolysis apparatus for producing hydrogen, where optimization of water desalination system operation throughout actual wind conditions, load patterns and the load range of the water demand in the electrolysis apparatus.

### Summary of the Invention

The above defined scope is met by the subject matter according to the independent claim. Advantageous embodiments of the present invention are described by the dependent claims.

According to the present invention an offshore power station is provided, which includes a wind turbine, a water desalination unit and an electrolysis apparatus for producing hydrogen. The water desalination unit is connected to an inlet of salted water and the electrolysis apparatus is connected to the water desalination unit for receiving a supply of desalinated water. The electrolysis apparatus and the water desalination unit are thermally connected to one another in such a way that a heat power input from the electrolysis apparatus is provided to the water desalination unit for the production of the supply of desalinated water and a cooling power input from the water desalination unit is provided to the electrolysis apparatus.

The water desalination unit may be a vacuum vapour compression distiller.

The water desalination unit receives salted water, for example seawater, through the inlet and desalinates it by using the excess heat from the electrolysis apparatus. The use of the excess heat cannot from the electrolysis apparatus reduces the power consumption needed for the desalination process, in order to enable a sufficiently efficient electrolyser production. The electrical power consumption needed for running the water desalination unit may be provided by the wind turbine, or by an auxiliary power device to be for example used in times with low or no wind. The electrolysis apparatus may also receive an electrical power input from the wind turbine, or by an auxiliary power device to be for example used in times with low or no wind. The thermal connection between the water desalination unit and the electrolysis apparatus provides cooling power for the hydrogen production.

According to embodiments of the present invention the thermal exchange may be performed in a heat exchanger, where the heat power input and the cooling power input are thermally connected to one another. The heat power input may comprise a flow of a first fluid from the electrolysis apparatus to the heat exchanger. Similarly, the cooling power input may comprise a flow of a second fluid from the water desalination unit to the heat exchanger, the second fluid being at a lower temperature than the first fluid. The first and/or the second fluid may be water, for example a flow of hot water from the electrolysis apparatus, which in the thermal contact is put in thermal contact with a flow of cold water from the water desalination unit.

According to embodiments of the present invention, the heat exchanger may be external to the water desalination unit and the electrolysis apparatus or may be comprised in the water desalination unit or in the the electrolysis apparatus.

The invention provides a standalone integrated offshore power station including electric energy generation from a renewable source, through the wind turbine, hydrogen production, through the electrolysis apparatus and freshwater generation, through the water desalination unit. An operational balance may be achieved so that all units constantly run smoothly without sudden shutdowns.

According to embodiments of the present invention, the electrolysis apparatus is to be connected to the buffer tank for receiving a second supply of desalinated water. The desalinated water buffer tank may be included in the system and used either as a safety supply or for operation start.

According to embodiments of the present invention, the electrolysis apparatus includes a secondary heat exchanger for cooling the electrolysis apparatus, in all cases when the cooling power from the water desalination unit is not enough.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

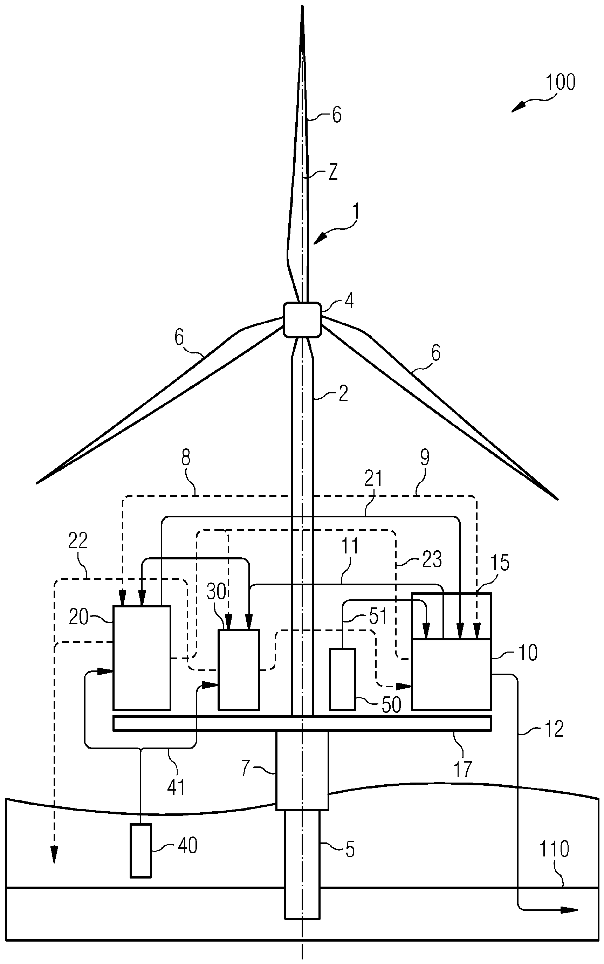

- Figure 1: shows a schematic section of an offshore power station according to the present invention.

### Detailed Description

The illustrations in the drawings are schematically. It is noted that in different figures, similar or identical elements are provided with the same reference signs.

**Figure** 1 shows an offshore power station 100 according to the invention. The power station 100 includes a wind turbine 1 comprising a tower 2, which is mounted on a foundation structure 5 includes at least one pile driven into a seabed 110. According to other embodiment of the present invention, the wind turbine 1 may be a floating wind turbine. The tower 2 and the pile 5 extend axially along a longitudinal axis Z of the offshore wind turbine 1. A nacelle 4 is attached to an upper end of the tower 2. The wind turbine 1 further comprises a wind turbine rotor attached to the nacelle 4 and having three blades 6. The offshore wind turbine 1 comprises a transition piece 7 for connecting the tower 2 to the foundation pile 5. The transition piece 7 is attached to the bottom end of the tower 2, longitudinally opposite to the upper end of the tower 2. The wind turbine 1 comprises an electrical generator (not shown on figure 1), which is rotationally coupled with the wind rotor for producing electrical energy to be provided to an electrical grid (not shown in the attached figures). According to embodiments of the present invention, the wind turbine 1 may be part of a wind turbine offshore plant including a plurality of wind turbines 1.

The offshore power station 100 further includes a water desalination unit 20 and an electrolysis apparatus 10 for producing hydrogen to be delivered through a pipeline 12. The pipeline 12 may deliver hydrogen onshore. The water desalination unit 20 and the electrolysis apparatus 10 may be attached to a platform 17 provided on the transition piece 7 or the tower 2. The water desalination unit 20 is connected to an inlet 40 of salted water (seawater) to be desalinated. From the inlet 40 the salted water is delivered to the water desalination unit 20 through a piping 41. The water desalination unit 20 may be a vacuum vapour compression distiller, which requires a heat power input for producing salted water. Alternatively, the water desalination unit 20 may be another type of desalination unit, which requires a heat power input for producing salted water. The water desalination unit 20 is powered by a first electrical power input 8 from the wind turbine 1. Alternatively, the water desalination unit 20 may be electrically powered by another source of electrical power. The water desalination unit 20 may comprise an outlet of cold water 22 to the environment.

The electrolysis apparatus 10 is connected to the water desalination unit 20 for receiving a supply 21 of desalinated water. From the desalinated water hydrogen is produced and delivered through the pipeline 12. The electrolysis apparatus 10 is powered by a second electrical power input 9 from the wind turbine 1. Alternatively, the electrolysis apparatus 10 may be electrically powered by another source of electrical power. The offshore power station 100 further includes a buffer tank 50 of desalinated water. The electrolysis apparatus 10 is connected to the buffer tank 50 for receiving a second supply 51 of desalinated water, in all cases when the main supply from the water desalination unit 20 is not enough. The buffer tank 50 may be attached to the platform 17. The production of hydrogen in the electrolysis apparatus 10 may produce an excess of heat.

The electrolysis apparatus 10 and the water desalination unit 20 are thermally connected to one another in such a way that a heat power input 11 from the electrolysis apparatus 10 is provided to the water desalination unit 20 for the production of the supply 21 of desalinated water and a cooling power input 23 from the water desalination unit 20 is provided to the electrolysis apparatus 10.

The offshore power station 100 further includes a heat exchanger 30 wherein the heat power input 11 and the cooling power input 23 are thermally connected to one another. In the embodiment of the attached figure, the heat exchanger 30 is represented as a unit external to both the water desalination unit 20 and the electrolysis apparatus 10. Alternatively, the heat exchanger 30 may be integrated in the water desalination unit 20 or in the electrolysis apparatus 10. The heat exchanger 30 may be attached to the platform 17. The heat exchanger may receive a flow of cold salted water from the inlet 40. The heat exchanger 30 may comprise an outlet of cold water 22 to the environment.

To provide the heat exchange in the heat exchanger 30 the heat power input 11 comprises a flow of a first fluid from the electrolysis apparatus 10 to the heat exchanger 30, while the cooling power input 23 comprises a flow of a second fluid from the water desalination unit 20 to the heat exchanger 30. the second fluid being at a lower temperature than the first fluid. The first and/or the second fluid may be water, for example a flow of water from the electrolysis apparatus, which in the thermal contact is put in thermal contact with a second flow of water from the water desalination unit, the temperature of the first flow being higher than the temperature of the second flow.

The electrolysis apparatus 10 may include a secondary heat exchanger 15, for example an air heat exchanger powered by an electrical input from the wind turbine 1, for cooling the electrolysis apparatus 10, whenever the cooling power from the water desalination unit is not enough.

The offshore power station 100 further includes a controller (not shown) connected to the wind turbine 1, the water desalination unit 20 and an electrolysis apparatus 10 and the heat exchanger 30 for regulating the required energy supply and provide an efficient hydrogen production. The described arrangement provides significant energy savings with respect to other forms of hydrogen production, both inshore and offshore.

## Claims

1. An offshore power station (100) including a wind turbine (1), a water desalination unit (20) and an electrolysis apparatus (10) for producing hydrogen (12), the water desalination unit (20) being connected to an inlet (40) of salted water, the electrolysis apparatus (10) being connected to the water desalination unit (20) for receiving a supply (21) of desalinated water, wherein the electrolysis apparatus (10) and the water desalination unit (20) are thermally connected to one another in such a way that an heat power input (11) from the electrolysis apparatus (10) is provided to the water desalination unit (20) for the production of the supply (21) of desalinated water and a cooling power input (23) from the water desalination unit (20) is provided to the electrolysis apparatus (10).

2. The offshore power station (100) according to claim 1, wherein the offshore power station (100) further includes a heat exchanger (30) wherein the heat power input (11) and the cooling power input (23) are thermally connected to one another.

3. The offshore power station (100) according to claim 1 or 2, wherein the heat power input (11) comprises a flow of a first fluid from the electrolysis apparatus (10).

4. The offshore power station (100) according to claim 3, wherein the cooling power input (23) comprises a flow of a second fluid from the water desalination unit (20), the second fluid being at a lower temperature than the first fluid.

5. The offshore power station (100) according to claim 3 or 4, wherein the first and/or the second fluid is water.

6. The offshore power station (100) according to any of the claims 2 to 5, wherein the heat exchanger (30) is comprised in the water desalination unit (20) or in the electrolysis apparatus (10).

7. The offshore power station (100) according to any of the previous claims, wherein the offshore power station (100) further includes a buffer tank (50), the electrolysis apparatus (10) being connected to the buffer tank (50) for receiving a second supply (51) of desalinated water.

8. The offshore power station (100) according to any of the previous claims, wherein the electrolysis apparatus (10) includes a secondary heat exchanger (15) for cooling the electrolysis apparatus (10).

9. The offshore power station (100) according to any of the previous claims, wherein the water desalination unit (20) is a vacuum vapour compression distiller.

10. The offshore power station (100) according to any of the previous claims, wherein the water desalination unit (20) and the electrolysis apparatus (10) are connected to the wind turbine (1) for receiving an electrical power input (8, 9).
